# EUROPEAN PATENT APPLICATION

(11) **EP 0 799 857 A2**
(43) Date of publication of application: **08.10.1997**
(21) Application number: 97200971.6
(22) Date of filing: 02.04.1997
(51) Int. Cl.: C08L 71/12, C08L 53/02

(54) **High impact polyphenylene ether/styrene resin/elastomer composition**

(30) Priority: 03.04.1996 US 627846
(71) Applicant: SHELL INTERNATIONALE RESEARCH MAATSCHAPPIJ B.V., 2596 HR Den Haag (NL)
(72) Inventor: Modic, Michael John, Houston, Texas 77077 (US)

(57) **Abstract**

A composition having improved impact strength at low temperatures comprising a polyphenylene ether , a styrene resin, and 2-40 weight percent based on the weight of the composition of an elastomeric block copolymer having at least two polymerised styrene endblocks and a ethylene/propylene midblock.
Preferably,the block copolymer is a linear styrene-ethylene/propylene-styrene-styrene block copolymer.

## Description

This invention relates to high impact polyphenylene ether compositions.

Polyphenylene ethers (PPE), also known as polyphenylene oxide, are naturally clear high temperature thermoplastic engineering resins. Because of their high glass transition temperatures the polymers by themselves are of limited utility.

However, PPE is highly compatible with styrene resins such as polystyrene. PPE/polystyrene blends have lower viscosities and thus constitute the type of PPE compositions typically employed in commerce. While PPE is a high strength material, it has low impact strength as measured by notch sensitive tests such as notched Izod.

It is well known to produce high impact polystyrene (HIPS) by rubber modification. High impact polystyrene is also highly compatible with PPE and thus can serve to improve both processability and impact strength.

Another class of polymers which can be blended with PPE resins is the block copolymers produced with alkali metal catalysts. This technology is well known in the art and allows the sequential polymerization of monomers such as vinylaromatics and conjugated dienes to give block copolymers having resinous and rubbery blocks. Through this technology, diblock polymers can be formed which are typically designated A-B. Also, triblock linear polymers which are generally designated A-B-A can be produced either by the sequential polymerization of the monovinylarene monomer followed by the conjugated diene monomer, followed by a second aliquot of monovinyl aromatic monomer or by the coupling of the A-B species with a difunctional coupling agent. Alternatively, polyfunctional coupling agents can be utilized to give a radial or star configuration. Generally, such polymers are defined in terms of their total monovinyl aromatic content since resinous products are produced from predominantly monovinyl aromatic component whereas rubbery materials result from predominantly conjugated diene compositions. These materials, too, are broadly known as impact modifiers for PPE.

However, these impact modification procedures for PPE fail to give good impact strength at the low temperatures encountered in many important potential utilities such as refrigerator and automobile parts. It is an object of this invention to provide PPE compositions having good low temperature impact properties; and

It is a further object of this invention to provide PPE compositions having improved melt flow properties.

In accordance with this invention, there is provided a composition comprising:
a polyphenylene ether ;
a styrene resin; and
2 to 40 weight percent, based on the total weight of the composition of an elastomeric block copolymer having an ethylene/propylene midblock and at least two styrene endblocks.

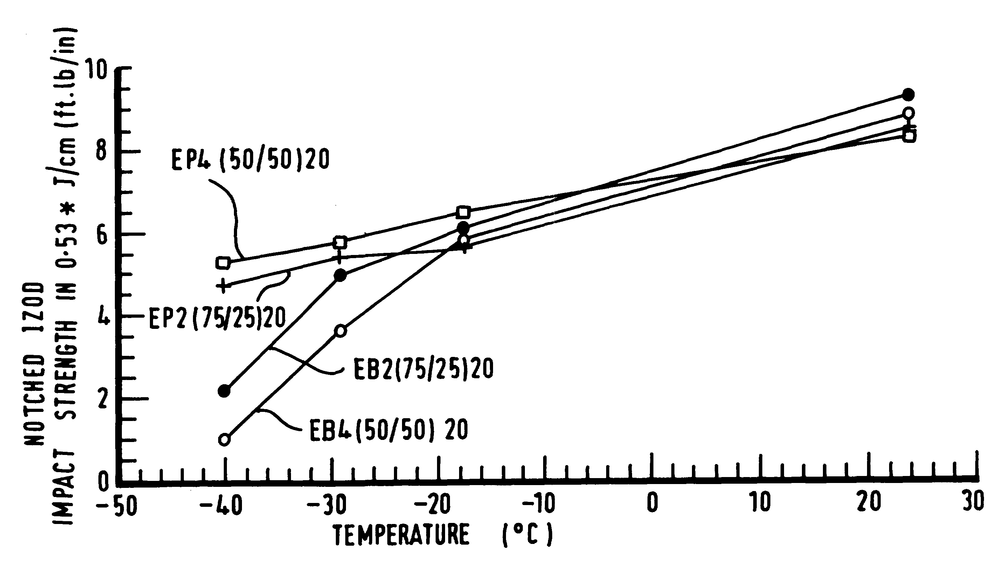

The drawing, forming a part hereof, is a plot of impact strength versus temperature for PPE/polystyrene blends which are (1) modified with an elastomer having an ethylene/butylene midblock and (2) modified in accordance with the invention with an elastomer having an ethylene/propylene midblock.

Surprisingly, it has been discovered that, in contrast with the effect of other similar elastomers, a styrene endblock elastomer having an ethylene/propylene midblock imparts good low temperature impact properties.

The PPE resins suitable for use in this invention are commercially available and are produced by techniques well known in the art such as by oxidizing a phenol with an oxygen-containing gas in the presence of a catalyst system comprising a cuprous salt and a tertiary amine. Suitable PPE resins are homo- and copolymers with repeating units of the formula 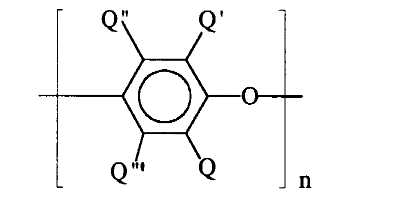 wherein Q, Q', Q", and Q"', are independently selected from the group consisting of hydrogen, hydrocarbon radicals, halohydrocarbon radicals having at least two carbon atoms between the halogen atom and the phenol nucleus, hydrocarbonoxy radicals and halohydrocarbonoxy radicals having at least two carbon atoms between the halogen atom and the phenol nucleus, and Q', Q", and Q"' in addition may be halogen with the proviso that if Q', Q" or Q"' are halogen, Q and Q' are preferably free of any tertiary carbon atoms; and n represents the total number of monomer residues and is an integer of at least 50. Such polymers are disclosed in U.S. 4,684,681.

Especially preferred is poly(2,6-dimethyl-1,4-phenylene)ether.

The styrene resin can be any styrene resin normally employed with polyphenylene ethers as described in U.S. 4,252,913 and U.S. 4,684,696. Preferably the styrene resin is styrene homopolymer or a rubber modified polystyrene, high impact polystyrene (HIPS), most preferably polystyrene. The HIPS compositions are commercially available and are generally mixtures of polystyrene with typically 4-20 preferably 4-14 wt. percent of a rubber such as EPDM or polybutadiene.

The elastomer can be made by anionic polymerization of styrene and isoprene followed by hydrogenation. The polymerization can be carried out with an alkali metal catalyst such as sec-butyllithium as disclosed for instance in U.S. 4,764,572, U.S. 3,231,635, U.S. 3,700,633, and U.S. 5,194,530.

Suitable elastomers with at least two styrene endblocks and an ethylene/ propylene midblock include A-B-A linear elastomers and radial, star-shaped or branched elastomers with styrene endblocks, the A-B-A linear elastomers being preferred. It is to be understood that A represents a styrene block and B represents an ethylene/propylene block. In the case of the A-B-A linear elastomers, sequential polymerization of the styrene, then isoprene, then styrene can be employed. Alternatively a styrene-isoprene-alkali metal living polymer can be coupled with a difunctional coupling agent. Radial or branched elastomers can be produced by coupling with a coupling agent having more than two active sites.

The block copolymer elastomers utilized in this invention are those which have been selectively hydrogenated to remove most of the ethylenic or vinyl unsaturation and to leave unaffected most of the aromatic unsaturation. Suitable known catalysts for accomplishing this include nickel compounds in combination with a reducing agent such as an aluminum alkyl. Hydrogenation is taught in U.S. Patents 3,634,549; 3,670,054; 3,700,633; and Reissue 27,145. The hydrogenation is effective to remove a majority, generally at least 90 percent, more generally at least 95 percent of the original unsaturation in the polymerized diene component and to remove no more than 50 percent, preferably no more than 25 percent, more preferably no more than 10 percent of the aromatic unsaturation in the polymerized monovinylarene component. Most preferably no more than about 2 percent of the diene unsaturation remains and no more than about 5 percent of the aromatic unsaturation is removed. The result is to convert the isoprene block into an ethylene/propylene (EP) block. That is, styrene-isoprene-styrene is converted into styrene-ethylene/propylene-styrene.

The references herein to "styrene" endblocks, of course, mean polymerized styrene. Similarly, the references to ethylene-propylene or ethylene/ propylene include the product obtained by selective hydrogenation of a polymerized isoprene block.

The block copolymer elastomers utilized in this invention have a weight percent polymerized styrene content within the range of 10 to 49, preferably 20 to 45, more preferably 27 to 37.

The individual polymerized styrene blocks have a molecular weight within the range of 7000 to 50,000, preferably a molecular weight within the range of 20,000 to 40,000, most preferably 25,000 to 32,000. The ethylene/propylene blocks generally have a molecular weight within the range of 50,000 to 300,000, preferably 100,000 to 200,000.

The total molecular weight of the block copolymers is within the range of 80,000 to 350,000, preferably 100,000 to 275,000.

Molecular weights of linear polydienes are conveniently measured by Gel Permeation Chromatography (GPC), where the GPC system has been appropriately calibrated. Polymers of known molecular weight are used to calibrate and these must be of the same molecular structure and chemical composition as the unknown linear polymers or segments that are to be measured. For anionically polymerized linear polymers, the polymer is essentially monodispersed and it is both convenient and adequately descriptive to report the "peak" molecular weight of the narrow molecular weight distribution observed. As used herein, references to molecular weight of linear polymers mean "peak" molecular weight of linear polymers. These techniques are known in the art as disclosed for instance in U.S. 5,229,464. Measurement of the true molecular weight of a final coupled star polymer is not as straightforward or as easy to make using GPC. This is because the star shaped molecules do not separate and elute through the packed GPC columns in the same manner as do the linear polymers used for the calibration, and, hence, the time of arrival at a UV or refractive index detector is not a good indicator of the molecular weight. A good analytical method to use for a star polymer is to measure the weight average molecular weight by light scattering techniques. The sample is dissolved in a suitable solvent at a concentration less than 1.0 gram of sample per 100 millimeters of solvent and filtered using a syringe and porous membrane filters of less than 0.5 microns pore size directly onto the light scattering cell. The light scattering measurements are performed as a function of scattering angle and of polymer concentration using standard procedures. The differential refractive index (DRI) of the sample is measured at the same wavelength and in the same solvent used for the light scattering.

Accordingly, molecular weights as reported herein are peak molecular weights when relating to linear block copolymers and weight average molecular weights when relating to radial, branched or star-shaped block copolymers.

The benefits of using the block copolymer elastomer having an ethylene-propylene midblock segment can apply to any PPE/styrene resin composition. Typically such compositions have a PPE/styrene resin weight ratio from 95/5 to 20/80. The invention is particularly applicable to compositions having a PPE/styrene resin weight ratio from 75/25 to 50/50.

The block copolymer elastomers are present in the composition of this invention in an amount within the range of 2-40, preferably 10-30, more preferably 10-20 weight percent based on the weight of the block copolymer, PPE and styrene resin.

The PPE, the elastomeric block copolymer and the styrene resin can be combined by either melt blending or solution blending, but preferably are combined by melt blending. The ingredients can be combined all together or can be combined in any order. Frequently the elastomer will be added to a PPE/polystyrene blend simply because such blends are commercially available.

The compositions of this invention generally contain a small amount of stabilizer such as an antioxidant, so as to prevent degradation of the polymer. Such stabilizers are generally present in an amount within the range of 0.01 to 2 weight percent, more generally 0.05 to 0.5 weight percent. Suitable stabilizers disclosed for instance in U.S. 4,835,200. One particularly suitable material is tetrakis-[methylene-(3,5-di-5-butyl-4-hydroxycinnamate)] methane sold under the tradename Irganox 1010 by Ciba Geigy. Other hindered phenols are also suitable. The compositions may also contain pigments, fillers, and other known ingredients used in PPE/polystyrene compositions.

In some instances, the compositions consist essentially of the PPE resin, the polystyrene, the block copolymer elastomer, and the stabilizer.

### EXAMPLES

In the following runs the following two elastomeric block copolymers were used.

| Run | Structure | PSC¹ | Molecular Weight |
|---|---|---|---|
| 1 | S-EB-S | 32 | 29,000-123,000-29,000 |
| 2 | S-EP-S | 32 | 29,000-123,000-29,000 |

| | | | |
|---|---|---|---|
| ¹ Weight percent total polymerized styrene content. | | | |

SEBS is a material prepared by sequential polymerization of styrene, butadiene, and styrene using an organolithium catalyst followed by hydrogenation of the polymerized butadiene block to give an ethylene/butylene (EB) structure. Hence, the polymer has a styrene-ethylene/butylene -structure.

SEPS is a sequentially polymerized styrene-isoprene-styrene polymer produced using an organolithium initiator followed by hydrogenation to give the styrene-ethylene/propylene-styrene structure.

Both polymerizations were carried out using sec-butyl lithium in cyclohexane solvent with hydrogenation prior to recovery using a nickel/aluminum catalyst to give a product wherein about 2 percent of the original aliphatic unsaturation remains and no more than 5 percent of the aromatic unsaturation is removed. The SEPS was prepared using preparation techniques as closely as possible identical to those used for the SEBS so as to give the same structure except for the use of isoprene instead of butadiene.

The polystyrene was a general purpose homopolymer with a MFI = 38 g/10 min. sold by Huntsman Chemical Company under the tradename PS210.

The PPE utilized was a product sold under the trade designation PPO 646 by GE Plastics. The PPE and each of the block copolymers was melt blended on a 25 mm corotating twin screw extruder at 300°C and a screw speed of 300 RPM. All of the ingredients, including the antioxidant were first dry tumbled together prior to addition to the twin screw extruder. The blend extrudates were collected as pellets and molded into specimens to test for flow properties, impact, tensile properties, modulus and heat distortion temperature. The results are set out in the following tables.

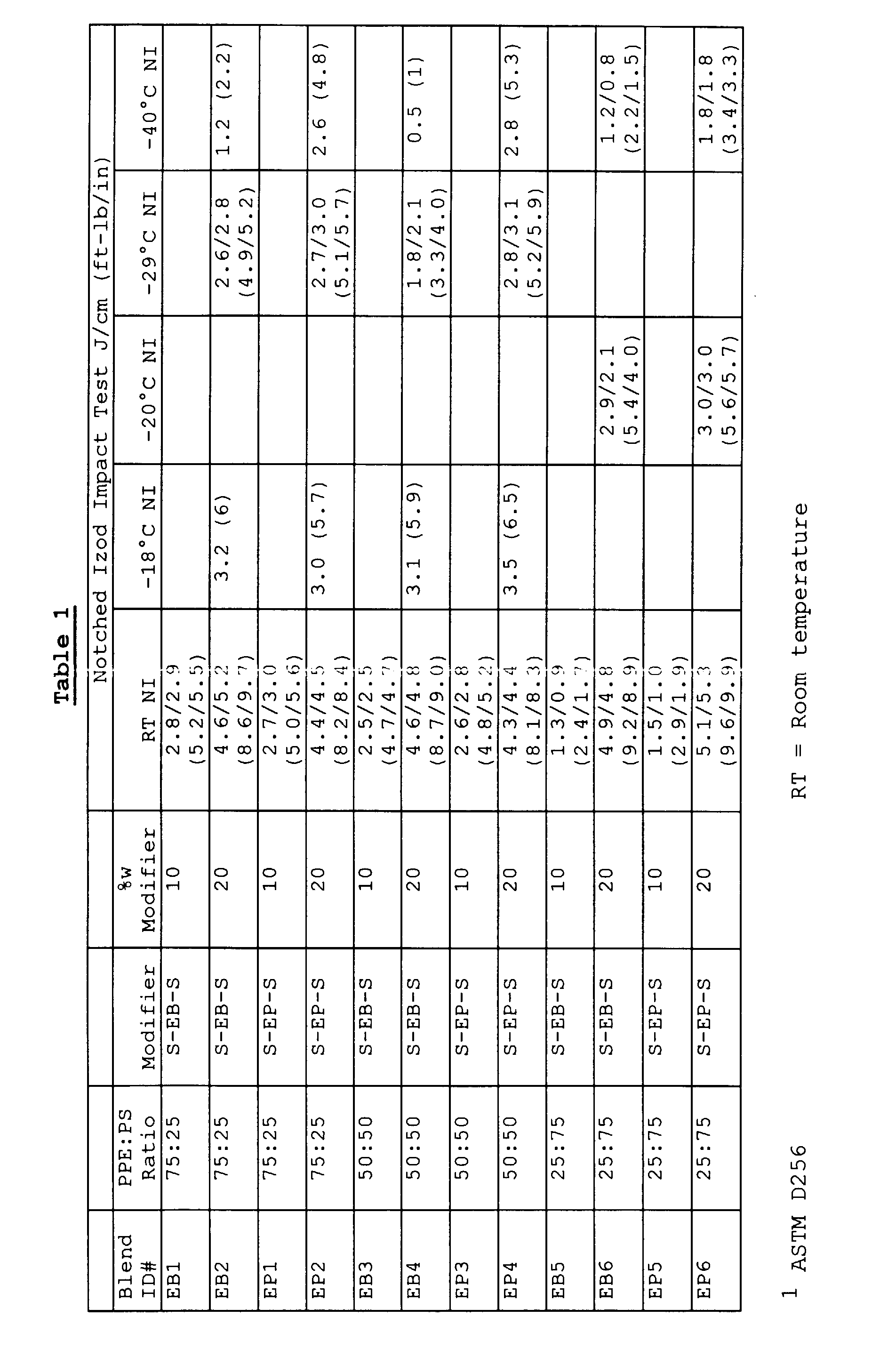

As can be seen from the data in Table 1, at a 75:25 PPE:polystyrene ratio and 20 weight percent elastomer there is a modest advantage in notched impact strength at -29°C for the composition using the elastomeric block copolymer having the ethylene/propylene midblock as compared with the polymer having an ethylene/butylene midblock. At -40°C the difference is dramatic with the composition having the ethylene/propylene midblock having over twice the notched impact strength (for an EB2 vs. EP2). Thus compositions are possible having a notched impact (ASTM D 256) at -40°C of greater than 1.6 J/cm (3) or even greater than 2.1 J/cm (4 ft-lbs/in). Even at a point near the extreme in PPE/styrene resin ratio there is still provided compositions with at least 50 percent greater notched Izod impact strength as compared with an identical composition except for the block copolymer being a styrene-ethylene/butylene-styrene block copolymer.

A comparison ot runs EB4 and EP4 show an even more dramatic advantage at 50:50 PPE/polystyrene, with the invention run exhibiting a 430 percent increase in impact strength (1 vs. 5.3 ft-lbs/in; that is 0.5 vs. 2.8 J/cm) at -40°C.

A comparison of runs EB6 and EP6 show an advantage is seen even at 25:75 PPE:polystyrene.

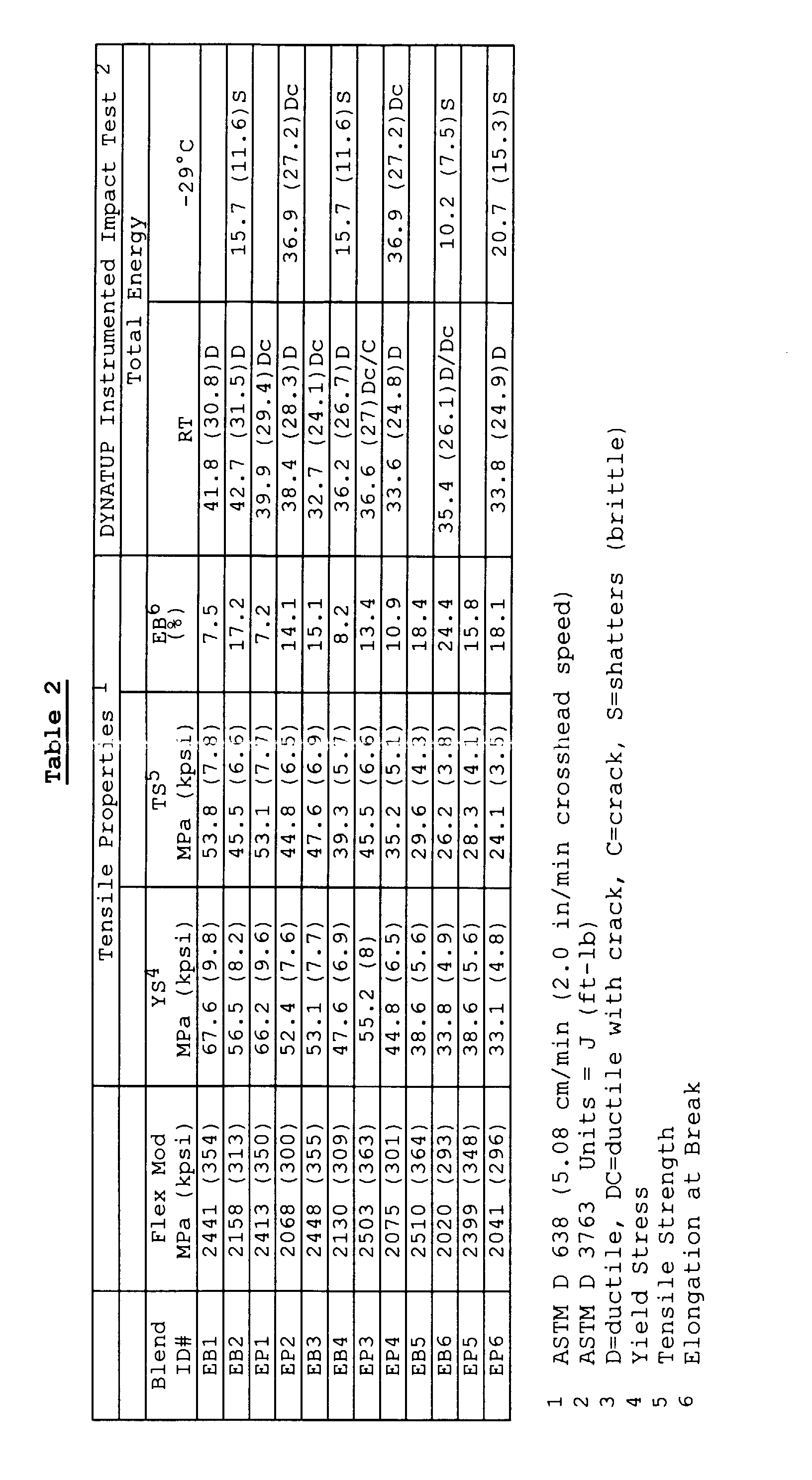

Table 2 shows two things. First a comparison of runs EB2 and EP2 or EB4 and EP4 shows that the extraordinary advantage in very low temperature impact strength shown in Table 1 is achieved with no significant deterioration in strength properties as measured by tensile strength. Second it shows that in a falling weight test, the advantage for the invention is shown dramatically at the -29°C temperature.

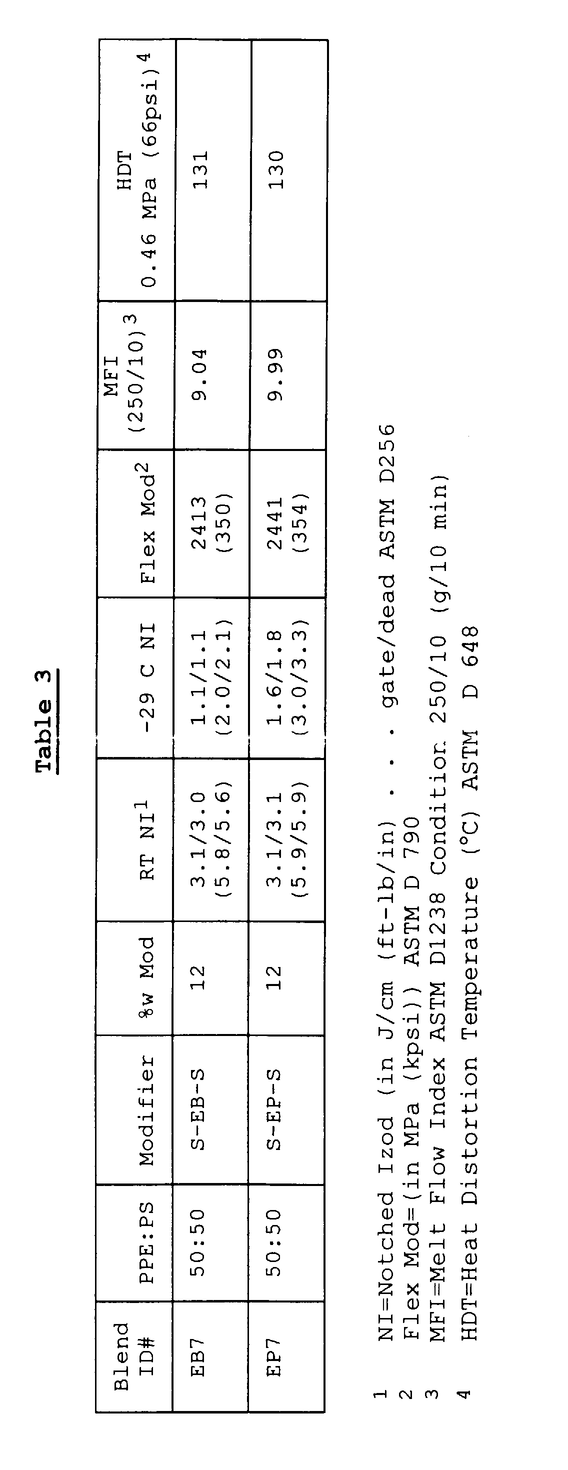

Table 3 confirms the impact strength advantage using another blend, this one using 12 weight percent of the elastomeric block copolymer. The data in Table 3 further show that the impact advantages achieved with no measurable sacrifice in modulus or heat distortion temperature. Furthermore this data shows an advantage in processability at this 12 percent level of elastomeric block copolymer. Any improvement in processability in PPE compositions, however modest, is significant. Dynamic viscosity tests (not shown here) at 10 percent elastomeric block copolymer confirmed this advantage. Dynamic viscosity tests at 20 percent elastomeric block copolymer showed a very small advantage for the invention.

While this invention has been described in detail for the purpose of illustration, it is not to be construed as limited thereby but is intended to cover all changes and modifications within the spirit and scope thereof.

## Claims

1. A composition comprising:
a polyphenylene ether ;
a styrene resin; and
2 to 40 weight percent, based on the total weight of the composition of an elastomeric block copolymer having an ethylene/propylene midblock and at least two polymerised styrene endblocks.

2. A composition as claimed in claim 1 wherein the block copolymer is a linear styrene-ethylene/propylene-styrene block copolymer.

3. A composition as claimed in claim 2, wherein the linear styrene-ethylene/propylene-styrene block copolymer is derived from the hydrogenation of a styrene-isoprene-styrene block copolymer.

4. A composition as claimed in any one of claims 1-3, wherein the polymerised styrene content of the block copolymer is within the range of 10 to 49 percent by weight.

5. A composition as claimed in any one of claims 1-4, wherein the block copolymer is present in the compositions in an amount from 10 to 30 percent by weight.

6. A composition as claimed in any one of claims 1-5, wherein the composition has a notched Izod impact strength at -40°C of at least 1.6 J/cm.

7. A composition as claimed in any one of claims 1-6, wherein the polyphenylene ether is a polymer with repeating units of the formula 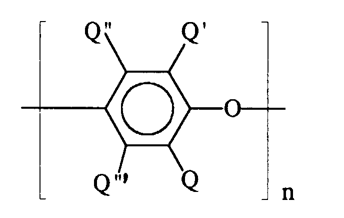 wherein Q, Q', Q", and Q"', are independently selected from the group consisting of hydrogen, hydrocarbon radicals, halohydrocarbon radicals having at least two carbon atoms between the halogen atom and the phenol nucleus, hydrocarbonoxy radicals and halohydrocarbonoxy radicals having at least two carbon atoms between the halogen atoms and the phenol nucleus, and Q', Q", and Q"' in addition may be halogen with the proviso that if Q', Q "" or Q"' are halogen, Q and Q' are preferably free of a tertiary carbon atom; and n represents the total number of monomer residues and is an integer of at least 50.

8. A composition as claimed in any one of claims 1-7, wherein the styrene resin is a styrene homopolymer or a rubber-modified polystyrene.

9. A composition as claimed in any one of claims 1-8, wherein the polyphenylene ether and the styrene resin are present in a weight ratio of 95:5 to 20:80.

10. A composition as claimed in any one of claims 1-9, further comprising a stabilizer.
